(19) Europäisches Patentamt
European Patent Office
Office européen des brevets

(11) **EP 1 569 289 B1**

(12) **EUROPEAN PATENT SPECIFICATION**

(45) Date of publication and mention
of the grant of the patent:
**25.07.2018   Bulletin 2018/30**

(51) Int Cl.:
*H01M 4/58* *(2010.01)*   *H01M 10/0525* *(2010.01)*
*H01M 4/136* *(2010.01)*   *H01G 9/00* *(2006.01)*
*H01M 4/62* *(2006.01)*   *G02F 1/15* *(2006.01)*

(21) Application number: **05011082.4**

(22) Date of filing: **14.03.2000**

(54) **New lithium insertion electrode materials based on orthosilicate derivatives**

Neue Elektrodenmaterialen zur Interkalation von Lithium auf Basis von Orthosilikatderivaten

Nouveaux matériaux d'électrode avec insertion du lithium à base de dérivés d'orthosilicate

(84) Designated Contracting States:
**DE FR GB IT**

(43) Date of publication of application:
**31.08.2005   Bulletin 2005/35**

(62) Document number(s) of the earlier application(s) in
accordance with Art. 76 EPC:
**00420045.7 / 1 134 826**

(73) Proprietors:
• **HYDRO-QUEBEC**
  **Montréal, Québec H2Z 1A4 (CA)**
• **CENTRE NATIONAL DE**
  **LA RECHERCHE SCIENTIFIQUE -CNRS-**
  **75016 Paris (FR)**
• **Université de Montréal**
  **Montréal,**
  **Québec H3C 3J7 (CA)**

(72) Inventors:
• **Armand, Michel**
  **Montreal,**
  **Quebec H3T 1N2 (CA)**
• **Michot, Christophe**
  **Montréal (Québec) H2T 2Z9 (CA)**

• **Ravet, Nathalie**
  **Montreal (Québec) H2L 4A5 (CA)**
• **Simoneau, Martin**
  **St. Bruno de Montarville,**
  **Quebec J3V 2Y3 (CA)**
• **Hovington, Pierre**
  **Bourcheville,**
  **Quebec J4B 2L4 (CA)**

(74) Representative: **Goulard, Sophie et al**
**Ipsilon**
**Le Centralis**
**63, avenue du Général Leclerc**
**92340 Bourg-la-Reine (FR)**

(56) References cited:
EP-A2- 1 049 182   WO-A-00/01024
CA-A1- 2 200 998   US-A- 4 042 482
US-A- 5 721 070   US-A- 6 085 015

• **ABRAMENKOVS A ET AL:**
  **"Thermoluminescence study of irradiated lithium**
  **orthosilicate" FUSION ENGINEERING AND**
  **DESIGN, ELSEVIER SCIENCE PUBLISHERS,**
  **AMSTERDAM, NL, vol. 39-40, 1 September 1998**
  **(1998-09-01), pages 693-697, XP004142978 ISSN:**
  **0920-3796**

**EP 1 569 289 B1**

**Description**

**FIELD OF THE INVENTION**

The invention relates to new lithium insertion electrode materials based on orthosilicates derivatives, electrochemical generators and variable optical transmission devices having an electrode containing these materials.

**BACKGROUND OF THE INVENTION**

Electrode materials are mainly derivatives of transition metals chalcogenides, especially oxides having a lamellar structure like $Li_xCoO_2$ or spinels like $Li_{2x}Mn_2O_4$. These materials usually operate via a lithium insertion mechanism with less than one lithium and electron exchanged per transition metal in the unit formula ($0 \leq x \leq 0.6$). Besides, these materials suffer from facile loss of the transition metal which is leached into the electrolyte. Cobalt is prohibitively expensive for large scale application.

Materials with the olivine structure $LiFePO_4$ (triphylite) and the quasiisomorphous delithiated material noted as "$\square FePO_4$" where "$\square$" represents the lithium site vacancies, have the advantage of an operating voltage of 3.5 V vs. $Li^+/Li°$, i.e. in the stability window of both liquid and polymer electrolytes with a flat discharge (lithium intercalation) plateau. The materials are however limited by relatively both slow $Li^+$ diffusion kinetics and low electronic conductivity due to the high electronegativity of the phosphate anion. The absence of non-stoichiometry or mutual miscibility for both phases ($LiFePO_4$ and $\square FePO_4$) is an advantage in terms of the shape of the discharge curve but limits the kinetics of phase transformation which may lead ultimately at high current densities to fragmentation of the material and loss of contact with the carbon grains acting as current collector. The phosphate of this type offers the possibility of exchanging only one lithium per unit formula.

US-5,721,070 discloses inorganic materials of formula $M_xT_yA_z$, wherein M is an alkali metal ion, T is a metal ion capable of existing in more than one stable oxidation state and A is a multi-element anion with a negative charge higher than 1.

CA-2,200,998 discloses an electrode material having an olivine structure based on iron and manganese and derived from tryphillite $LiMPO_4$ (for example $LiFePO_4$).

Conversely, it is known that the compounds with either the $Li_2SO_4$, $Li_3PO_4$, $Li_4SiO_4$ and their solid solutions possess relatively high diffusion coefficients for lithium ions, but have no redox activity.

**SUMMARY OF THE INVENTION**

In the present invention, orthosilicates containing the $SiO_4^{4-}$ tetranion as the building block are used as redox materials by incorporation of at least one transition elements with at least two valency levels, according to claim 1. Lithium ingress or egress from the structure to compensate for the valency change of the redox couples during electrode operation and keep overall electroneutrality.

**DETAILED DESCRIPTION OF THE INVENTION**

The general formula of the materials of the invention is:

$$Li_xM_{m-t}T_t[SiO_4]_{1-p}[PO_4]_p$$

wherein:

M represents $Mn^{2+}$ or $Fe^{2+}$ and mixtures thereof;
T represents a metal in the +3 oxidation state, chosen among: $Al^{3+}$, $Ti^{3+}$, $Cr^{3+}$, $Fe^{3+}$, $Mn^{3+}$, $Ga^{3+}$, $V^{3+}$; and as $0 \leq t \leq 1$ the $SiO_4^{4-}$ anion is the building block M and T are elements residing in octahedral or tetrahedral sites; p is the stoichiometric coefficient for P5+, residing in the silicon tetrahedral sites, and

$$0 < p < 1; \P$$

$$0 \leq x \leq 2, 1 \leq m \leq 2; \text{ and } x + 2m = 4 - p \quad \blacksquare \quad Ζ$$

Silicon is the second most abundant element in the earth crust, and silicates structures are chemically very robust, and thus electrochemically stable. The preferred transition metals besides iron and manganese are chosen among: titanium, vanadium, chromium, manganese, iron, cobalt, nickel, copper, niobium and tantalum. The compounds containing a large fraction of iron and/or manganese are preferred due to the abundance and lack of toxicity of these elements. In addition, metals with fixed valency or redox states whose potential lies outside the domain of operation of the electrode can be substituted partially for the transition elements to improve the diffusion characteristics of the lithium ions and/or increase the number of available sites, help control grain size and allow the existence of continuous solid solution between the oxidized and reduced form of the electrode material. These elements are preferably chosen among lithium, magnesium, calcium, zinc aluminum, gallium and tin. For instance, these substitutions allows for the coexistence of iron and/or manganese in two different oxidation states in the same phase, or introduce specific interactions with other elements having redox levels close to those of Fe and Mn (e.g.: $Fe^{2+}/Ti^{4+} \Leftrightarrow Fe^{3+}/Ti^{3+}$, $Mn^{2+}/V^{5+} \Leftrightarrow Mn^{3+}/V^{4+}$ etc.) both of which are favorable to electronic conductivity, while disorder on the anionic site provides preferential diffusion sites for $Li^+$.

Another aspect of the invention relates to the possibility to substitute the silicon sites by various elements. The orthosilicate anion being isosteric with the sulfate, phosphate, germanate and vanadate anions, the corresponding elements can easily replace silicon in this type of structure, as does boron and aluminum, offering a wide choice of materials with complete control of the charge density on the anionic sites. Similarly, the propensity of orthosilicates structures to accommodate large fractions of either vacancies or interstitial ions is very favorable to lithium ion diffusion while maintaining the integrity of the structure during lithium intercalation-desintercalation processes.

The materials according to the invention have preferably the orthorombic structures determined by X-ray and electron diffraction for lithium phosphate (a and g forms), both the low and high temperature form, where the metal ions occupy the structure of lithium orthosilicate $Li_4SiO_4$. Capacities well in excess of 160 mAh/g can be obtained, which are superior than for the conventional electrode materials. Another advantage of the materials of the present invention is to prevent the leaching of transition metals into the electrolyte due to the high charge of the orthosilicate anion $SiO_4^{4-}$ which binds selectively the multiply charged cations, including the transition elements.

The compounds of the invention are especially useful, when used alone or in admixture with other redox-active compounds, as a component of stable electrode materials in electrochemical cells, and primary or secondary batteries in which the negative electrode is a source of lithium ions. Typical examples include, in a non limiting way, metallic lithium, lithium alloys, nanodispersions of such alloys in a lithium oxide matrix, such as those obtained by reduction of $SnO$ or $SnO_2$, a lithium intercalation compound in carbon, especially graphite or carbonaceous matters resulting from the pyrolysis of organic derivatives, like petroleum coke or polyparaphenylene, lithium-titanium spinels of general formula $Li_{1+y}Ti_{2-x/4}O_4$ ($0 \leq x \leq 1$, $0 \leq y \leq 1$, independently) and its solid solutions with other spinels, or a lithium-transition metal mixed nitride like $Li_{3-x}Co_xN$ ($0 \leq x \leq 1$,). These materials can be used alone or in admixtures.

Other applications are in supercapacitors or as counter-electrode for controlled reflection-transmission windows ("smart windows") due to the low optical absorption of the compounds in different oxidation states.

The compounds of the present invention are easily prepared by the techniques of inorganic chemistry and ceramics known to the man skilled in the art. In general, oxides, salts or derivatives of the elements to be incorporated in the final composition of the material are mixed in a predetermined ratio and heated at a preset temperature to ensure reaction. Preferably, the metallic salts are those derived from anions that easily decompose at moderate temperatures to leave the oxides. These include the organic salts like acetates, oxalates and in general carboxylic acid derivatives, betadiketonates, alkoxides or mixtures thereof. Preferred inorganic salts similarly are chosen among hydroxides, nitrates, carbonates, sulfates. The so-called sol-gel techniques are especially appreciated as they allow to incorporate the elements in a highly dispersed form which results in homogeneous powders of controllable grain size at relatively low temperature. The silicon alkoxides are especially useful for this purpose as they hydrolyze into silica precursors at room temperature and the silica gel thus formed have a high surface area and adsorbs large quantities of metal salt leading to homogeneous materials upon heat treatment. A wide choice of silicon, titanium, germanium, aluminum derivatives alkoxides are commercially available Variations of this technique are the coprecipitation of elements form aqueous or non-aqueous media and the Pechini process where polyester-polyacid is formed in solution and chelates the ion from solution this step being followed by drying and pyrolysis. The control of the oxidation level of the elements, especially transition elements can be achieved by working in a controlled environment. Low partial pressures of oxygen can be maintained with vacuum, an inert gas or reducing mixtures like hydrogen or carbon monoxide/carbon dioxide mixture. Well defined oxygen activities can thus be obtained from known thennodynamical data. Conversely, air or oxygen bring the transition element to high valence states.

The redox state of the material can also be controlled by chemical extraction or insertion of lithium from the structure, thus mimicking the electrode operation. In a non limiting way, known oxidants able to extract lithium can be chosen among bromine, chlorine, iodine, the nitrosonium or nitronium salts of stable anions like $NO^+BF_4^-$ or $NO_2^+PF_6^-$. Reducing agents, in a non limiting way can be similarly chosen among: the iodide ion, $LiBH_4$, the radical-anion derivatives of lithium with condensed aromatic molecules (naphtalene, anthracene, benzophenone), organometallic reagents like butyl lithium, lithium thiolates. The desired degree of lithium content of the compounds of the invention can also be obtained electrochemically.

The following examples are provided to illustrate the present invention and shall by no means by construed as limited its scope.

## EXAMPLES

Example 1 (not part of the invention)

To 90 ml of water and 10 ml of methanol are added 20.4 g of lithium acetate dihydrate $Li(C_2H_3O_2) \cdot 2(H_2O)$, 24,5 g of manganese acetate tetrahydrate $(Mn(C_2H_3O_2)_2 \cdot 4(H_2O))$ and 14.8 ml of tetramethoxysilane. The mixture is milled with zirconia pellets in a heavy walled plastic container on a roller mill for 60 hours. The thick slurry is poured onto a PTFE evaporating dish and dried at 90°C in an oven with air circulation. The resulting mass is powdered in a mortar and the organic residues are removed by heat treatment at 350°C in air. The resulting brownish-green powder is transferred to an alumina boat and the compound is treated at 800°C in a electrically heated furnace under a reducing gas stream containing 8% hydrogen diluted in argon. 13 g of $Li_2MnSiO_4$ are obtained (81% yield).

Example 2 (not part of the invention)

71.8 g of ferrous oxide FeO and 89.9 of lithium metasilicate $Li_2SiO_3$ are ball-milled with high carbon steel ball for 4 hours. The resulting mixture is transferred into a quartz ampoule in which some iron turnings are added. The ampoule is evacuated under secondary vacuum while kept at 200°C and sealed. The reaction

$$FeO + Li_2SiO_3 \Rightarrow Li_2FeSiO_4$$

is complete at 800°C in 4 hours. After cooling, the ampoule is opened under argon and the iron turnings are removed magnetically.

Example 3 (not part of the invention)

Iron protoxide FeO (71.8 g) and lithium metasilicate $Li_2SiO_3$ (90 g) are ball-milled with high carbon steel ball for 4 hours. The resulting mixture is transferred into a quartz ampoule in which some iron turnings are added. The ampoule is evacuated under secondary vacuum while kept at 200°C and sealed. The reaction

$$FeO + Li_2SiO_3 \Rightarrow Li_2FeSiO_4$$

is complete at 800°C in 4 hours.

Example 4 (not part of the invention)

21.6 g of iron oxalate dihydrate, 1.79 g manganese oxalate dihydrate and 5.17 g of lithium carbonate are milled similarly as in example 1 with 13.4 g of polydiethoxysiloxane (Gelest Inc, Tullytouwn PA, USA catalog N° PSI-023) in 100 ml of 96 % ethyl alcohol. The resulting slurry is evaporated and calcined at 500°C under air. The cake is pulverized in a ball mill for 20 minutes and the resulting powder is treated at 1050°C for 10 hours in an tubular furnace under an equivolumic mixture of $CO_2$ and CO. The resulting compound has the formula $Li_{1.4}Fe_{1.2}Mn_{0.1}O_4$.

Example 5 (not part of the invention)

To 50 ml of methanol are added 19.4 g of lithium acetate dihydrate $Li(C_2H_3O_2) \cdot 2(H_2O)$, 19.6 g of manganese acetate tetrahydrate $Mn(C_2H_3O_2)_2 \cdot 4(H_2O)$, 14.8 ml of tetramethoxysilane and 2.75 ml of titanium tetraisopropoxide diluted in 20 ml of isopropanol. The mixture is milled with zirconia pellets in a heavy walled plastic container on a roller mill for 60 hours. The slurry is poured onto a PTFE evaporating dish and dried at 80°C in a air circulation oven. The resulting mass is powdered in a mortar and the organic residues are removed by heat treatment at 350°C in air. The resulting powder is transferred to an alumina boat and the compound is treated as in example 1 at 800°C under a reducing gas stream containing 8 % hydrogen diluted in argon. The compound obtained corresponds to the formula $Li_{1.9}Mn_{0.8}Ti_{0.1}SiO_4$ where Ti is in the +3 state and manganese is divalent.

Example 6 (not part of the invention)

3 g of the compound of example 2, $Li_2FeSiO_4$ are suspended in 20 ml of acetonitrile and treated with 1.7 g of bromine under stirring at room temperature. After two hours, the suspension is filtered and washed with acetonitrile leaving a solid having the composition $Li_1FeSiO_4$. This corresponds to an electrode capacity of 172 mAh/g. Similarly, 7 g of the material of example 4 are treated with 3 g of bromine in 50 ml of acetonitrile. After filtration, the material $Li_{0.1}Fe_{1.2}Mn_{0.1}O_4$ is obtained. It corresponds to an electrode capacity of 260 mAh/g.

Example 7 (not part of the invention)

5 g of the compound of example 1, $Li_2MnSiO_4$ are suspended in 40 ml of nitromethane and treated with 12 g nitronium hexafluorophosphate $NO_2PF_6$ under stirring at room temperature. After two hours, the suspension is filtered and washed with nitromethane leaving a brownish-purple solid having the composition $MnSiO_4$. This corresponds to an electrode capacity of 345 mAh/g

Example 8

8 g of the compound of example 1, $Li_2MnSiO_4$ and 3.36 g of lithium iron phosphate $LiFePO_4$ are ball-milled with steel balls under an inert atmosphere until the grain size does not exceed 4 microns. The mixture is introduced in a closed-end nickel tube which is evacuated and welded. The tube is treated at 750°C for 10 hours and allowed to cool to room temperature. The solid solution obtained has the formula $Li_{1.7}Mn_{0.7}Fe_{0.3}Si_{0.7}P_{0.3}O_4$.

Example 9 (not part of the invention)

A solid-state battery using a 10 mm lithium anode laminated on a 10 mm nickel foil, a 25 mm polymer electrolyte and a 45 mm positive electrode is constructed with a total active surface of 4 cm$^2$. The electrolyte is a crosslinked condensation polymer prepared according to J. Electrochem. Soc. 141-7, 1915 (1994) and Journal of Power Sources, 54-1, 40 (1995) with lithium trifluoromethane sulfonimide $Li(CF_3SO_2)_2N$ as a solute corresponding to a 16:1 ratio of oxygens from polymer ether groups to $Li^+$. The positive electrode is obtained from a slurry of 53% by volume of PEO, molecular weight 200 000, 40 % by volume of the material of example 4 and delithiated according to example 6, and 7% by volume of Ketjenblack® in acetonitrile, by coating technique on a 12 mm aluminium foil, 1.2 lithium per formula unit can be cycled between 3.5 and 2.4 volts.

Example 10 (not part of the invention)

A gel type rocking-chair ("lithium ion") battery is constructed using a 40 mm anode made from graphite flakes (4 mm) with an ethylene-propylene-diene binder (5%) by volume, and laminated on a 10 mm copper foil, a 45 mm electrolyte containing a vinylidene fluoride-hexafluoropropylene copolymer (Solvay, Belgium), 30 ww%, fumed silica (5 ww%) with gelled with a liquid elecrolyte consisting of 1.2 molar lithium hexafluorophate in equivolumic ethylene carbonate-ethylmethyl carbonate (65 ww%) mixed solvent The positive electrode consists in a blend of the electode material of example 5 (80 ww%), Ketjenblack® (8 ww%) and the vinylidene fluoride-hexafluoropropylene copolymer used in the electrolyte (12 ww%). The battery is housed in a flat metal-plastic laminate container allowing for the passage of current leads. At 25°C, the battery operation allows the exchange of 1.3 lithium per manganese in the positive electrode in the voltage range 2 - 4.3 volts.

While the invention has been described in connection with specific embodiments thereof, it will be understood that it is capable of further modifications and this application is intended to cover any variations, uses or adaptations of the invention following, in general, the principles of the invention and including such departures from the present description as come within known or customary practice within the art to which the invention pertains, and as may be applied to the essential features hereinbefore set forth, and as follows in the scope of the appended claims.

**Claims**

1. A lithium ion-reversible insertion-type electrode material having an orthosilicate structure and having the formula

$$Li_xM_{m-t}T_t[SiO_4]_{1-p}[PO_4]_p$$

wherein:

M represents $Mn^{2+}$ or $Fe^{2+}$ and mixtures thereof,
T represents a metal in the +3 oxidation state selected from the group consisting of $Al^{3+}$, $Ti^{3+}$, $Cr^{3+}$, $Fe^{3+}$, $Mn^{3+}$, $Ga^{3+}$, and $V^{3+}$; and as $0 \leq t \leq 1$
the $SiO_4^{4-}$ anion is the building block
M and T are elements residing in the octahedral or tetrahedral sites;
p is the stoichiometric coefficient for $P^{5+}$, residing in the silicon tetrahedral sites, and $0 < p < 1$;

$$0 \leq x \leq 2, \quad \boxed{1 \leq m \leq 2}, \quad \text{and } x + 2m = 4 - p.$$

2. Electrode material according to claim 1 **characterized in that** more than one lithium ion can be extracted or inserted per unit formula.

3. Electrical generator having a least one positive and one negative electrode **characterized in that** at least one positive electrode contains a material according to claim 1 or 2 and at least one negative electrode is a source of lithium ion.

4. Electrical generator according to claim 3 **characterized in that** the negative electrode is metallic lithium, a lithium alloy, possibly as a nanodispersion in lithium oxide, a lithium intercalation compound carbon or carbonaceous material resulting from the pyrolysis of organic derivatives, a lithium-titanium spinel $Li_{1+y}Ti_{2-xl4}O_4$ wherein $0 \leq x$ and $0 \leq y \leq 1$ and its solid solutions with other spinels, or a lithium-transition metal mixed nitride and mixtures thereof.

5. Electrical generator according to claim 3 **characterized in that** a conductive additive is present in the positive electrode.

6. Electrical generator according to claim 5 **characterized in that** the conductive additive in the positive electrode material is carbon.

7. Electrical generator according to claim 3 **characterized in that** the positive electrode comprises a material of formula $Li_\lambda Fe_f Mn_m Si_s P_p O_4$ wherein $f + m \leq 1.2$; $s + p = 1$; $0 < p \leq 0.6$; $8-5p-4s-2m-2f \geq \lambda \geq 8-5p-4s-4m-3f$.

8. Electrical generator according to claim 3 **characterized in that** the positive electrode contains in addition to the materials of claim 1 another intercalation material.

9. Electrical generator according to claim 8 **characterized in that** the intercalation material is a lamellar dichalcognenide, a vanadium oxide $VO_x$ wherein $2.1 \leq x \leq 2.5$ or a Nasicon-related material like $Li_3Fe_2(PO_4)_3$.

10. Electrical generator according to claims 3 to 6 **characterized in that** the positive electrode contains a polymeric binder.

11. Electrical generator according to claims 3 and 10 **characterized in that** the polymeric binder is a homopolymer or copolymer of tetrafluoroethylene or an ethylenepropylene-diene terpolymer.

12. Electrical generator according to claim 11 **characterized in that** the positive electrode contains an aprotic solvent and a salt, the cation of which is at least in part $Li^+$.

13. Electrical generator according to claim 3 and 10 **characterized in that** the polymeric binder possesses ionic conductivity.

14. Electrical generator according to claim 12 **characterized in that** the polymeric binder is a polyether crosslinked or not and dissolving a salt, the cation of which is at least in part Li+.

15. Electrical generator according to claim 10 **characterized in that** the polymeric binder is swollen by an aprotic solvent and contains a salt, the cation of which is at least in part $Li^+$.

16. Electrical generator according to claim 10 **characterized in that** the polymeric binder is a polyether, a polyester, a methyl methacrylate-based polymer, an acrylonitrile-based polymer, a vinylidene fluoride-based polymer.

17. Electrical generator according to claims 12 and 15 **characterized in that** the aprotic solvent is ethylene carbonate, propylene carbonate, dimethylcarbonate, diethylcarbonate, methyl-ethyl carbonate, y-butyrolactone, a tetraalkyls-ufarnide, a dialkyether of a mono-, di-, tri-, tetra- or higher oligo- ethylene glycols of molecular weight lower or equal to 2000, and mixtures thereof.

18. Electrical generator of the supercapacitor type **characterized in that** at least one of the electrode comprises a material according to claim 1.

19. Variable optical transmission device constructed from transparent semi-conductor coated glass or plastic and two electrodes separated by a solid or gel electrolytes, **characterized in that** at least one of the electrode contain a material according to claim 1.

20. Variable optical transmission device according to claim 19 **characterized in that** at least one of the electrode comprises a layer of a thin film of material according to claim 1 on a transparent semi-conductor coated glass or plastic.

## Patentansprüche

1. Elektrodenmaterial vom Reversible-Lithiumioneneinlagerung-Typ mit einer Orthosilikatstruktur und mit der Formel

$$Li_xM_{m-t}T_t[SiO_4]_{1-p}[PO_4]_p$$

wobei:

M $Mn^{2+}$ oder $Fe^{2+}$ und Mischungen davon darstellt,
T ein Metall im +3-Oxidationszustand darstellt, das aus der Gruppe ausgewählt ist, bestehend aus $Al^{3+}$, $Ti^{3+}$, $Cr^{3+}$, $Fe^{3+}$, $Mn^{3+}$, $Ga^{3+}$ und $V^{3+}$; und $0 \leq t \leq 1$,
das $SiO_4^{4-}$-Anion der Baustein ist,
M und T Elemente sind, die sich in den oktahedralen oder tetrahedralen Stellen befinden;
p der stöchiometrische Koeffizient für $P^{5+}$ ist, der sich in den tetrahedralen Siliciumstellen befindet, und $0 < p < 1$;

$$0 \leq x \leq 2, \quad 1 \leq m \leq 2 \text{ und } x + 2m = 4 - p.$$

2. Elektrodenmaterial nach Anspruch 1, **dadurch gekennzeichnet, dass** mehr als ein Lithiumion pro Einheitsformel extrahiert oder eingelagert werden kann.

3. Elektrischer Generator mit zumindest einer positiven und einer negativen Elektrode, **dadurch gekennzeichnet, dass** zumindest eine positive Elektrode ein Material nach Anspruch 1 und 2 enthält und zumindest eine negative Elektrode eine Lithiumionenquelle ist.

4. Elektrischer Generator nach Anspruch 3, **dadurch gekennzeichnet, dass** die negative Elektrode metallisches Lithium, eine Lithiumlegierung, ggf. als Nanodispersion in Lithiumoxid, ein Lithiuminterkalationsverbundkohlenstoff oder kohlenstoffhaltiges Material, das aus der Pyrolyse von organischen Derivaten entsteht, ein Lithiumtitanspinell $Li_{1+y}Ti_{2-xl4}O_4$, wobei $0 \leq x$ und $0 \leq y \leq 1$, und feste Lösungen davon mit anderen Spinellen oder ein Lithium-Übergangsmetall-Mischnitrid und Mischungen davon ist.

5. Elektrischer Generator nach Anspruch 3, **dadurch gekennzeichnet, dass** ein leitfähiger Zusatzstoff in der positiven Elektrode vorhanden ist.

6. Elektrischer Generator nach Anspruch 5, **dadurch gekennzeichnet, dass** der leitfähige Zusatzstoff im Material der positiven Elektrode Kohlenstoff ist.

7. Elektrischer Generator nach Anspruch 3, **dadurch gekennzeichnet, dass** die positive Elektrode ein Material der Formel $Li_\lambda Fe_f Mn_m Si_s P_p O_4$ umfasst, wobei $f + m \leq 1,2$; $s + p = 1$; $0 < p \leq 0,6$; $8 - 5p - 4s - 2m - 2f \geq \lambda \geq 8 - 5p - 4s - 4m - 3f$.

8. Elektrischer Generator nach Anspruch 3, **dadurch gekennzeichnet, dass** die positive Elektrode zusätzlich zu den Materialien nach Anspruch 1 ein weiteres Interkalationsmaterial enthält.

9. Elektrischer Generator nach Anspruch 8, **dadurch gekennzeichnet, dass** das Interkalationsmaterial ein lamellares Dichalcogenid, ein Vanadiumoxid $VO_x$, wobei $2,1 \leq x \leq 2,5$, oder ein NASICON-ähnliches Material wie $Li_3Fe_2(PO_4)_3$ ist.

10. Elektrischer Generator nach den Ansprüchen 3 bis 6, **dadurch gekennzeichnet, dass** die positive Elektrode ein polymeres Bindemittel enthält.

11. Elektrischer Generator nach den Ansprüchen 3 und 10, **dadurch gekennzeichnet, dass** das polymere Bindemittel ein Homopolymer oder Copolymer von Tetrafluorethylen oder ein Ethylenpropylendienterpolymer ist.

12. Elektrischer Generator nach Anspruch 11, **dadurch gekennzeichnet, dass** die positive Elektrode ein aprotisches Lösungsmittel und ein Salz enthält, dessen Kation zumindest teilweise $Li^+$ ist.

13. Elektrischer Generator nach Anspruch 3 und 10, **dadurch gekennzeichnet, dass** das polymere Bindemittel Ionenleitfähigkeit besitzt.

14. Elektrischer Generator nach Anspruch 12, **dadurch gekennzeichnet, dass** das polymere Bindemittel ein Polyether ist, der vernetzt oder nicht vernetzt ist und ein Salz auflöst, dessen Kation zumindest teilweise Li+ ist.

15. Elektrischer Generator nach Anspruch 10, **dadurch gekennzeichnet, dass** das polymere Bindemittel durch ein aprotisches Lösungsmittel aufgequollen ist und ein Salz enthält, dessen Kation zumindest teilweise $Li^+$ ist.

16. Elektrischer Generator nach Anspruch 10, **dadurch gekennzeichnet, dass** das polymere Bindemittel ein Polyether, ein Polyester, ein Polymer auf Methylmethacrylatbasis, ein Polymer auf Acrylonitrilbasis, ein Polymer auf Vinylidenfluoridbasis ist.

17. Elektrischer Generator nach den Ansprüchen 12 und 15, **dadurch gekennzeichnet, dass** das aprotische Lösungsmittel Ethylencarbonat, Propylencarbonat, Dimethylcarbonat, Diethylcarbonat, Methylethylcarbonat, y-Butyrolacton, ein Tetraalkylsufarnid, ein Dialkylether eines Mono-, Di-, Tri-, Tetra- oder höheren Oligoethylenglykolen mit einem Molekulargewicht $\leq 2000$ und Mischungen davon ist.

18. Elektrischer Generator vom Superkondensatortyp, **dadurch gekennzeichnet, dass** zumindest eine der Elektrode ein Material nach Anspruch 1 umfasst.

19. Vorrichtung mit variabler optischer Übertragung, die aus transparentem halbleiterbeschichtetem Glas oder Kunststoff und zwei Elektroden konstruiert ist, die durch Fest- oder Gelelektrolyten getrennt sind, **dadurch gekennzeichnet, dass** zumindest eine der Elektrode ein Material nach Anspruch 1 enthält.

20. Vorrichtung mit variabler optischer Übertragung nach Anspruch 19, **dadurch gekennzeichnet, dass** zumindest eine der Elektrode eine Schicht aus einem Dünnfilm des Materials nach Anspruch 1 auf einem transparenten halbleiterbeschichteten Glas oder Kunststoff umfasst.

**Revendications**

1. Matériau d'électrode du type à insertion réversible à ions lithium ayant une structure d'orthosilicate et répondant à la formule

$$Li_xM_{m-t}T_t[SiO_4]_{1-p}[PO_4]_p$$

dans laquelle :

M représente $Mn^{2+}$ ou $Fe^{2+}$ et leurs mélanges,
T représente un métal dans l'état d'oxydation +3 choisi dans le groupe constitué par $Al^{3+}$, $Ti^{3+}$, $Cr^{3+}$, $Fe^{3+}$, $Mn^{3+}$, $Ga^{3+}$, et $V^{3+}$ ; avec $0 \leq t \leq 1$
l'anion $SiO_4{}^{4-}$ est le bloc de construction
M et T sont des éléments résidant dans les sites octaédriques ou tétraédriques ;
p est le coefficient stoechiométrique pour $P^{5+}$, résidant dans les sites tétraédriques de silicium, et $0 < p < 1$ ;

$$0 \leq x \leq 2, \quad 1 \leq m \leq 2 \text{ et } x + 2m = 4 - p.$$

**2.** Matériau d'électrode selon la revendication 1, **caractérisé en ce que** plusieurs ions lithium peuvent être extraits ou insérés par formule unitaire.

**3.** Générateur électrique ayant au moins une électrode positive et une électrode négative, **caractérisé en ce qu'**au moins une électrode positive contient un matériau selon la revendication 1 ou 2 et au moins une électrode négative est une source d'ions lithium.

**4.** Générateur électrique selon la revendication 3, **caractérisé en ce que** l'électrode négative est en lithium métallique, en un alliage de lithium, éventuellement sous la forme d'une nanodispersion dans de l'oxyde de lithium, en un matériau carboné ou un carbone composite avec intercalation de lithium résultant de la pyrolyse de dérivés organiques, en une spinelle de lithium-titane $Li_{1+y}Ti_{2-x|4}O_4$ où $0 \leq x$ et $0 \leq y \leq 1$ et ses solutions solides avec d'autres spinelles, ou en un nitrure mixte de lithium et de métal de transition, ainsi que leurs mélanges.

**5.** Générateur électrique selon la revendication 3, **caractérisé en ce qu'**un additif conducteur est présent dans l'électrode positive.

**6.** Générateur électrique selon la revendication 5, **caractérisé en ce que** l'additif conducteur dans le matériau d'électrode positive est le carbone.

**7.** Générateur électrique selon la revendication 3, **caractérisé en ce que** l'électrode positive comprend un matériau de formule $Li_\lambda Fe_f Mn_m Si_s P_p O_4$ dans laquelle $f + m \leq 1,2$ ; $s + p = 1$ ; $0 < p \leq 0,6$ ; $8 - 5p - 4s - 2m - 2f \geq \lambda \geq 8 - 5p - 4s - 4m - 3f$.

**8.** Générateur électrique selon la revendication 3, **caractérisé en ce que** l'électrode positive contient, en plus des matériaux de la revendication 1, un autre matériau d'intercalation.

**9.** Générateur électrique selon la revendication 8, **caractérisé en ce que** le matériau d'intercalation est un dichalcogénure lamellaire, un oxyde de vanadium $VO_x$ où $2,1 \leq x \leq 2, 5$ ou un matériau de type Nasicon tel que $Li_3Fe_2(PO_4)_3$.

**10.** Générateur électrique selon les revendications 3 à 6, **caractérisé en ce que** l'électrode positive contient un liant polymère.

**11.** Générateur électrique selon les revendications 3 et 10, **caractérisé en ce que** le liant polymère est un homopolymère ou un copolymère de tétrafluoroéthylène ou un terpolymère d'éthylène-propylène-diène.

**12.** Générateur électrique selon la revendication 11, **caractérisé en ce que** l'électrode positive contient un solvant aprotique et un sel, dont le cation est au moins en partie $Li^+$.

**13.** Générateur électrique selon les revendications 3 et 10, **caractérisé en ce que** le liant polymère possède une conductivité ionique.

**14.** Générateur électrique selon la revendication 12, **caractérisé en ce que** le liant polymère est un polyéther réticulé ou non et dissolvant un sel dont le cation est au moins en partie $Li^+$.

**15.** Générateur électrique selon la revendication 10, **caractérisé en ce que** le liant polymère est gonflé par un solvant aprotique et contient un sel dont le cation est au moins en partie $Li^+$.

**16.** Générateur électrique selon la revendication 10, **caractérisé en ce que** le liant polymère est un polyéther, un polyester, un polymère à base de méthacrylate de méthyle, un polyester à base d'acrylonitrile, un polymère à base de fluorure de vinylidène.

**17.** Générateur électrique selon les revendications 12 et 15, **caractérisé en ce que** le solvant aprotique est le carbonate d'éthylène, le carbonate de propylène, le carbonate de diméthyle, le carbonate de diéthyle, le carbonate de méthyléthyle, la $\gamma$-butyrolactone, un tétraalkyl-ufarnide, un éther dialkylique d'un mono-, di-, tri-, tétra- ou oligo supérieur-éthylèneglycol de masse moléculaire inférieure ou égale à 2000, et leurs mélanges.

**18.** Générateur électrique du type supercondensateur, **caractérisé en ce qu'**au moins l'une des électrodes contient un matériau selon la revendication 1.

**19.** Dispositif de transmission optique variable assemblé à partir d'une matière plastique ou d'un verre revêtu semi-conducteur transparent et de deux électrodes séparées par un électrolyte solide ou en gel, **caractérisé en ce qu'**au moins l'une des électrodes contient un matériau selon la revendication 1.

**20.** Dispositif de transmission optique variable selon la revendication 19, **caractérisé en ce qu'**au moins l'une des électrodes comprend une couche d'un film mince de matériau selon la revendication 1 sur une matière plastique ou un verre revêtu semi-conducteur transparent.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5721070 A

- CA 2200998

**Non-patent literature cited in the description**

- *J. Electrochem. Soc.,* 1994, vol. 141-7, 1915

- *Journal of Power Sources,* 1995, vol. 54-1, 40